# EUROPÄISCHE PATENTSCHRIFT

(11) **EP 3 679 323 B1**
(45) Veröffentlichungstag und Bekanntmachung des Hinweises auf die Patenterteilung: **01.06.2022**
(21) Anmeldenummer: 18753384.9
(22) Anmeldetag: 08.08.2018
(51) Int. Cl.: G01C 19/5712, G01C 19/5747

(54) **DREIACHSIGE MIKROMECHANISCHE DREHRATEN-SENSORANORDNUNG MIT LINEAR UND ROTATORISCH ANTREIBBAREN SENSOREINRICHTUNGEN**
THREE AXIS MICROMECHANICAL ROTATIONAL RATE SENSOR ARRANGEMENT WITH LINEARLY AND ROTATIONALLY DRIVABLE SENSOR DEVICES
ARRANGEMENT DE CAPTEURS DE VITESSE DE ROTATION AVEC DES DISPOSITIFS DE CAPTEURS ENTRAÎNABLES DE MANIÈRE LINÉAIRE ET ROTATIVE

(30) Priorität: 05.09.2017 DE 102017215503
(43) Veröffentlichungstag der Anmeldung: 15.07.2020
(73) Patentinhaber: Robert Bosch GmbH, 70442 Stuttgart (DE)
(72) Erfinder: NEUL, Reinhard, 70567 Stuttgart (DE); LASSL, Andreas, 70825 Korntal-Muenchingen (DE); KUHLMANN, Burkhard, 72762 Reutlingen (DE); DEGENFELD-SCHONBURG, Peter, 71272 Renningen (DE); PRUETZ, Odd-Axel, 72622 Nuertingen (DE); KUHLMANN, Nils Felix, 71139 Ehningen (DE); LIEWALD, Jan-Timo, 72127 Kusterdingen (DE); BODE, Niels, 70184 Stuttgart (DE); KUEHNEL, Matthias, 71034 Boeblingen (DE)
(86) Internationale Anmeldenummer: PCT/EP2018/071565
(87) Internationale Veröffentlichungsnummer: WO 2019/048171

(56) Entgegenhaltungen:
- DE-A1-102009 027 897

## Beschreibung

Die Erfindung betrifft eine mikromechanische Drehraten-Sensoranordnung und ein entsprechendes Herstellungsverfahren.

### Stand der Technik

Obwohl auch beliebige mikromechanische Bauelemente anwendbar sind, werden die vorliegende Erfindung und die ihr zugrundeliegende Problematik anhand von mikromechanischen Drehraten-Sensoranordnungen für Kraftfahrzeuge erläutert.

Während im Bereich der Consumerelektronik die Verwendung von dreiachsigen Drehratensensoren üblich ist, werden für Automotive-Anwendungen typischerweise einachsige Drehratensensoren verwendet.

Für komplexere Automotive-Anwendungen, wie z.B. Inertialnavigation für automatisiertes Fahren oder für satellitengestützte Navigation, Lagebestimmung von Kamera- oder LIDAR-basierter Umweltsensorik oder auch für Zweiradanwendungen sind robuste dreiachsige Drehratensensoren erforderlich.

Die DE 10 2010 062 095 A1 und die WO 96/39615 offenbaren zweiachsige Drehratensensoreinrichtungen mit zwei Rotoreinrichtungen, welche um eine erste Achse gegenphasig oszillierend antreibbar sind und um eine zweite und dritte Achse antisymmetrisch verkippbar sind.

Die DE 10 2009 027 897 A1 beschreibt eine dreiachsige Drehratensensoreinrichtungen mit ebenfalls zwei Rotoreinrichtungen, welche um eine erste Achse gegenphasig oszillierend antreibbar sind und um eine zweite und dritte Achse antisymmetrisch verkippbar sind. Außerdem weist die dreiachsige Drehratensensoreinrichtungen noch als Antrieb der zwei Rotoreinrichtungen zwei in gegenphasige Schwingbewegungen versetzbare Antriebsrahmen auf, mittels welcher eine Drehbewegung der Drehratensensoreinrichtungen um die erste Achse ermittelbar sein soll.

Die DE 10 2010 061 755 A1 offenbart einen Drehratensensor mit einem ersten Corioliselement, einem zweiten Corioliselement, einem dritten Corioliselement und einem vierten Corioliselement, wobei das erste Corioliselement und das vierte Corioliselement gleichsinnig parallel zu einer sich zur Haupterstreckungsebene parallel und senkrecht zur ersten Achse erstreckenden zweiten Achse antreibbar sind und wobei das erste und das zweite Corioliselement gegensinnig parallel zur zweiten Achse antreibbar sind und wobei das erste Corioliselement und das dritte Corioliselement gegensinnig parallel zur zweiten Achse antreibbar sind.

### Offenbarung der Erfindung

Die Erfindung schafft eine mikromechanische Drehraten-Sensoranordnung nach Anspruch 1 und ein entsprechendes Herstellungsverfahren nach Anspruch 14.

Bevorzugte Weiterbildungen sind Gegenstand der jeweiligen Unteransprüche.

### Vorteile der Erfindung

Die der vorliegenden Erfindung zugrunde liegende Idee liegt in der Verbindung eines einachsigen und eines zweiachsigen Drehratensensors über einen gemeinsamen Antriebsmechanismus. Der resultierende dreiachsige Drehratensensor ist robust gegenüber äußerer Linear- und Drehbeschleunigung, so dass insbesondere die Anforderungen für sicherheitsrelevante Anwendungen im Automotive-Umfeld erfüllt sind.

Die erfindungsgemäße mikromechanische Drehraten-Sensoranordnung mit dem gemeinsamen Antriebsmechanismus für alle drei Messachsen bietet mehrere Vorteile gegenüber drei einzelnen Drehratensensoren. Da es nur einen Antriebsmechanismus gibt, können im Sensorkern Antriebsstrukturen sowie Anschlusspads und die dazugehörigen Verdrahtungen eingespart werden. Somit kann auch der ASIC kompakt gebaut werden, weil nur ein Antriebsregelkreis zur Verfügung gestellt werden muss. Besonders vorteilhaft ist die Vermeidung von unterschiedlichen Antriebsfrequenzen für die verschiedenen Drehratensensoren, sodass eine gegenseitige Beeinflussung, z.B. durch parasitäres Übersprechen der Antriebskräfte, vermieden werden kann. Zudem wird die Verpackung einfacher, und mögliche Fehlstellungen der einzelnen Drehratensensoren zueinander sind durch das Design der erfindungsgemäßen Drehraten-Sensoranordnung ausgeschlossen.

Störmoden, die auf verschiedene Arten zu einem Fehlsignal eines dreiachsigen Drehratensensors führen können, z.B. durch (resonante) Anregung mittels äußeren Kräften (Vibration), oder durch nichtlineares Übersprechen in der Mechanik oder der Elektrostatik des Systems auftreten könnten, lassen sich vermeiden. Verwendet man hingegen drei identische einachsige Drehratensensoren, so haben alle Drehratensensoren die gleichen Störmoden, die prozessbedingt bei unterschiedlichen Frequenzen liegen, sodass sich insgesamt die Zahl der Störmoden in einem betrachteten Frequenzbereich verdreifacht. In einem mehrachsigen Drehratensensor ist es somit möglich, eine Reduzierung der Störmoden weiterhin dadurch zu erreichen, dass dieselben Detektionsstrukturen jeweils für mehr als nur eine Messachse sensitiv ausgelegt werden.

Außerdem weist die rotatorisch antreibbare erste Drehratensensoreinrichtung eine erste Rotoreinrichtung, welche um die erste Achse oszillierend antreibbar ist, und eine zweite Rotoreinrichtung, welche um die erste Achse gegenphasig zur ersten Rotoreinrichtung oszillerend antreibbar ist, auf. Die erste Rotoreinrichtung ist durch die erste äußere Drehrate um die zweite Achse und durch die zweite äußere Drehrate um die dritte Achse(x) verkippbar, wobei die zweite Rotoreinrichtung durch die erste äußere Drehrate um die zweite Achse und die zweite äußere Drehrate um die dritte Achse(x) antiparallel zur ersten Rotoreinrichtung verkippbar ist. Die erste Kopplungseinrichtung weist eine erste Federeinrichtung auf, über die die erste Rotoreinrichtung und die zweite Rotoreinrichtung derart gekoppelt sind, dass ein paralleles Verkippen um die zweite Achse unterdrückt und ein antiparalleles Verkippen um die zweite Achse ermöglicht ist. Weiterhin vorgesehen sind eine zweite Kopplungseinrichtung, über die die erste Rotoreinrichtung und die zweite Rotoreinrichtung derart gekoppelt sind, dass ein paralleles Verkippen um die dritte Achse unterdrückt und ein antiparalleles Verkippen um die dritte Achse ermöglicht ist, eine erste Erfassungseinrichtung zum Erfassen eines antiparallelen Verkippens der ersten und zweiten Rotoreinrichtung um die zweite Achse und eine zweite Erfassungseinrichtung zum Erfassen eines antiparallelen Verkippens der ersten und zweiten Rotoreinrichtung um die dritte Achse. Eine derartige erste Drehratensensoreinrichtung ist robust herstellbar.

Gemäß einer weiteren bevorzugten Weiterbildung weist die linear antreibbare zweite Drehratensensoreinrichtung eine Rahmeneinrichtung mit einem ersten Rahmen und einem zweiten Rahmen auf, wobei der zweite Rahmen zumindest teilweise vom ersten Rahmen umgeben ist, wobei der erste Rahmen entlang der zweiten Achse oszillierend antreibbar ist und wobei der zweite Rahmen entlang der zweiten Achse gegenphasig zum ersten Rahmen oszillierend antreibbar ist, und wobei der erste und zweite Rahmen durch die dritte äußere Drehrate um die erste Achse gegenphasig entlang der dritten Achse oszillierend auslenkbar sind. Weiterhin vorgesehen sind eine dritte Kopplungseinrichtung, über die der erste Rahmen und der zweite Rahmen derart gekoppelt sind, dass ein gleichphasiges Auslenken des ersten und zweiten Rahmens entlang der dritten Achse unterdrückt und ein gegenphasiges Auslenken des ersten und zweiten Rahmens entlang der dritten Achse ermöglicht ist, und eine dritte Erfassungseinrichtung zum Erfassen eines gegenphasigen Auslenkens des ersten und zweiten Rahmens entlang der dritten Achse. Eine derartige zweite Drehratensensoreinrichtung kann gut mit der ersten Drehratensensoreinrichtung gekoppelt werden.

Gemäß einer weiteren bevorzugten Weiterbildung sind der erste und zweite Rahmen mit der ersten und zweiten Rotoreinrichtung zum gegenphasigen oszillierenden Antreiben der ersten und zweiten Rotoreinrichtung um die erste Achse über die erste Kopplungseinrichtung verbunden. So lässt sich eine einfache lineare Kopplung realisieren.

Gemäß einer weiteren bevorzugten Weiterbildung ist eine Antriebsrahmeneinrichtung zum Antreiben des ersten und zweiten Rahmens aufweist, die über eine vierte Federeinrichtung mit dem ersten Rahmen und dem zweiten Rahmen verbunden. So lässt sich der Antriebsbereich effektiv von dem Detektionsbereich entkoppeln.

Gemäß einer weiteren bevorzugten Weiterbildung ist die Antriebsrahmeneinrichtung mit der ersten und zweiten Rotoreinrichtung zum gegenphasigen oszillierenden Antreiben der ersten und zweiten Rotoreinrichtung um die erste Achse über die erste Kopplungseinrichtung verbunden. So ist auch die erste Drehratensensoreinrichtung von der linearen Detektionsbewegung entkoppelt.

Gemäß einer weiteren bevorzugten Weiterbildung weist die Antriebsrahmeneinrichtung einen ersten Antriebsrahmen und einen zweiten Antriebsrahmen auf, welche an gegenüberliegenden Seiten des ersten Rahmens angeordnet sind, und einen dritten Antriebsrahmen aufweist, der den zweiten Rahmen umgibt und bereichsweise über den ersten Rahmen geführt ist, wobei der erste und zweite Antriebsrahmen über eine fünfte Federeinrichtung mit dem dritten Antriebsrahmen verbunden sind. Dies ermöglich eine symmetrische Einspannung des ersten und zweiten Rahmens.

Gemäß einer weiteren bevorzugten Weiterbildung weist die Antriebsrahmeneinrichtung einen ersten Antriebsrahmen aufweist, der den ersten Rahmen und den zweiten Rahmen u-förmig umschließt, und einen zweiten Antriebsrahmen aufweist, der gabelförmig zwischen den ersten Rahmen und den zweiten Rahmen eingeführt ist, wobei der erste und zweite Antriebsrahmen über eine sechste Federeinrichtung verbunden sind. Dies vereinfacht den Herstellungsprozess.

Gemäß einer weiteren bevorzugten Weiterbildung weist die erste Kopplungseinrichtung einen ersten Steg und eine zweite Federeinrichtung auf, welche den ersten Rahmen mit der ersten Rotoreinrichtung verbinden, wobei die erste Kopplungseinrichtung einen zweiten Steg und eine dritte Federeinrichtung aufweist. So lässt sich eine effektive lineare Kopplung erzielen.

Gemäß einer weiteren bevorzugten Weiterbildung weist die erste Kopplungseinrichtung einen dritten Steg und einen vierten Steg auf, welche mit der ersten Federeinrichtung verbunden sind. So lässt sich eine effektive Kopplung hinsichtlich des antisymmetrischen Verhaltens erzielen.

Gemäß einer weiteren bevorzugten Weiterbildung weist die zweite Kopplungseinrichtung eine erste Wippe auf, welche über eine siebente Federeinrichtung mit der ersten und zweiten Rotoreinrichtung verbunden ist, und weist eine zweite Wippe auf, welche über eine achte Federeinrichtung mit der ersten und zweiten Rotoreinrichtung verbunden ist. Dies verbessert die Kopplung zwischen den Rotoreinrichtungen weiter.

Gemäß einer weiteren bevorzugten Weiterbildung weist die dritte Kopplungseinrichtung eine neunte Federeinrichtung mit einer Mehrzahl von Federn auf. Derartige Federn sind leicht herstellbar und gut auf die erforderlichen Eigenschaften abstimmbar.

Gemäß einer weiteren bevorzugten Weiterbildung weisen die erste Erfassungseinrichtung und die zweite Erfassungseinrichtung eine jeweilige Mehrzahl kapazitiver Plattenelektroden auf, welche unterhalb der ersten und zweiten Rotoreinrichtung angeordnet sind. Dies sorgt für eine zuverlässige Detektion des Verkippens der Rotoreinrichtungen.

Gemäß einer weiteren bevorzugten Weiterbildung weist die dritte Erfassungseinrichtung eine Mehrzahl von kapazitiven Kammelektroden aufweist, welche innerhalb des ersten und zweiten Rahmens angeordnet sind. Derartige Antriebe sind besonderes zuverlässig und robust.

### Kurze Beschreibung der Zeichnungen

Weitere Merkmale und Vorteile der vorliegenden Erfindung werden nachfolgend anhand von Ausführungsformen mit Bezug auf die Figuren erläutert.

Es zeigen:
- Fig. 1: eine schematische ebene Darstellung zur Erläuterung einer mikromechanischen Drehraten-Sensoranordnung gemäß einer ersten Ausführungsform der vorliegenden Erfindung;
- Fig. 2: eine schematische ebene Darstellung zur Erläuterung einer mikromechanischen Drehraten-Sensoranordnung gemäß einer zweiten Ausführungsform der vorliegenden Erfindung;
- Fig. 3a)-c): schematische ebene Darstellungen zur Erläuterung einer Federkopplungseinrichtung für die mikromechanische Drehraten-Sensoranordnung gemäß der vorliegenden Erfindung;
- Fig. 4a)-c): schematische ebene Darstellungen zur Erläuterung einer weiteren Federkopplungseinrichtung für die mikromechanische Drehraten-Sensoranordnung gemäß der vorliegenden Erfindung;
- Fig. 5a)-c): schematische ebene Darstellungen zur Erläuterung verschiedener Federaufhängungseinrichtungen für die mikromechanische Drehraten-Sensoranordnung gemäß der vorliegenden Erfindung;
- Fig. 6: eine schematische ebene Darstellung zur Erläuterung einer mikromechanischen Drehraten-Sensoranordnung gemäß einer dritten Ausführungsform der vorliegenden Erfindung; und
- Fig. 7: eine schematische ebene Darstellung zur Erläuterung einer mikromechanischen Drehraten-Sensoranordnung gemäß einer vierten Ausführungsform der vorliegenden Erfindung.

### Ausführungsformen der Erfindung

In den Figuren bezeichnen gleiche Bezugszeichen gleiche bzw. funktionsgleiche Elemente.

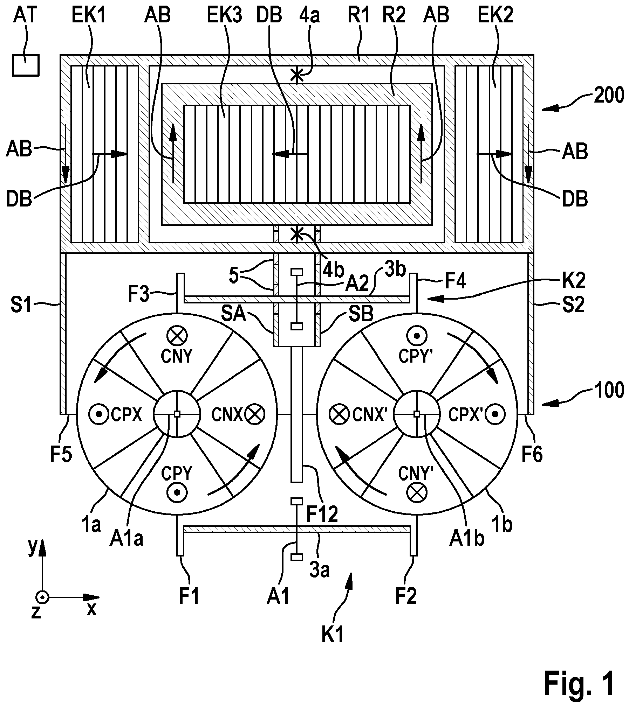

Fig. 1 zeigt eine schematische ebene Darstellung zur Erläuterung einer mikromechanischen Drehraten-Sensoranordnung gemäß einer ersten Ausführungsform der vorliegenden Erfindung.

In Fig. 1 bezeichnet Bezugszeichen 100 eine rotatorisch um eine erste Achse (z-Achse) oszillierend antreibbare erste Drehratensensoreinrichtung zum Erfassen einer ersten äußeren Drehrate um eine zweite Achse (y-Achse) und einer zweiten äußeren Drehrate um eine dritte Achse (x-Achse). Die erste, zweite und dritte Achse (z, y, x) sind senkrecht zueinander angeordnet.

Die rotatorisch antreibbare erste Drehratensensoreinrichtung 100 weist eine erste Rotoreinrichtung 1a, welche um die erste Achse (z-Achse) oszillierend antreibbar ist, und eine zweite Rotoreinrichtung 1b, welche um die erste Achse (z-Achse) gegenphasig zur ersten Rotoreinrichtung 1a oszillierend antreibbar ist.

Bei der vorliegenden ersten Ausführungsform sind die erste Rotoreinrichtung 1a und die zweite Rotoreinrichtung 1b scheibenförmig gestaltet, wobei in einer jeweiligen zentralen Aussparung eine zugehörige erste bzw. zweite Aufhängungseinrichtung A1a, A1b angeordnet und verankert sind.

Die erste Rotoreinrichtung 1a ist durch die erste äußere Drehrate um die zweite Achse (y-Achse) und die zweite äußere Drehrate um die dritte Achse (x-Achse) verkippbar. Die zweite Rotoreinrichtung 1b ist durch die erste äußere Drehrate um die zweite Achse (y-Achse) und die zweite äußere Drehrate um die dritte Achse (x-Achse) antiparallel zur ersten Rotoreinrichtung 1a verkippbar.

Die erste und die zweite Rotoreinrichtung 1a, 1b sind über eine erste Federeinrichtung F12 derart gekoppelt, dass ein paralleles Verkippen um die zweite Achse (y-Achse) unterdrückt und ein antiparalleles Verkippen um die zweite Achse (y-Achse) ermöglicht ist, und zwar aufgrund einer anisotropen Federkonstante.

Die Federeinrichtung F12 ist zudem Bestandteil einer ersten Kopplungseinrichtung, welche die erste Drehratensensoreinrichtung 100 mit einer zweiten

Drehratensensoreinrichtung 200 verbindet, welche weiter unten detailliert beschrieben wird.

Weiterhin vorgesehen ist eine zweite Kopplungseinrichtung K1, K2, über die die erste Rotoreinrichtung 1a und die zweite Rotoreinrichtung 1b derart gekoppelt sind, dass ein paralleles Verkippen um die dritte Achse (x-Achse) unterdrückt und ein antiparalleles Verkippen um die dritte Achse (x-Achse) ermöglicht ist, und zwar ebenfalls aufgrund einer anisotropen Federkonstante der zweiten Kopplungseinrichtung K1, K2.

Die zweite Kopplungseinrichtung K1, K2 weist einen ersten Teil K1 mit einer ersten Wippe 3a auf, welche beiderseits über eine jeweilige Federeinrichtung F1, F2 mit der ersten und zweiten Rotoreinrichtung 1a, 1b verbunden ist. Die erste Wippe 3a weist eine erste elastische Aufhängung A1 auf, welche an einem (nicht dargestellten) Substrat verankert ist.

Weiterhin weist die zweite Kopplungseinrichtung K1, K2 einen zweiten Teil K2 auf, welcher eine zweite Wippe 3b umfasst, die über eine jeweilige Federeinrichtung F3, F4 mit der ersten und zweiten Rotoreinrichtung 1a, 1b verbunden ist. Die die zweite Wippe 3b weist eine zweite elastische Aufhängung A2 auf, welche an dem (nicht dargestellten) Substrat verankert ist.

Eine erste Erfassungseinrichtung CPY, CNY, CPY', CNY' dient zum Erfassen eines antiparallelen Verkippens der ersten und zweiten Rotoreinrichtung 1a, 1b um die zweite Achse (y-Achse). Eine zweite Erfassungseinrichtung CPX, CNX, CPX', CNX' dient zum Erfassen eines antiparallelen Verkippens der ersten und zweiten Rotoreinrichtung 1a, 1b um die dritte Achse (x-Achse).

Die erste Erfassungseinrichtung CPY, CNY, CPY', CNY' und die zweite Erfassungseinrichtung CPX, CNX, CPX', CNX' weisen beispielsweise eine jeweilige Mehrzahl kapazitiver Plattenelektroden auf, welche unterhalb der ersten und zweiten Rotoreinrichtung 1a, 1b angeordnet sind, wie in Fig. 1 durch jeweilige Kreise schematisch angedeutet.

Bezugszeichen 200 bezeichnet eine linear oszillierend entlang der zweiten Achse (y-Achse) antreibbare zweite Drehratensensoreinrichtung zum Erfassen einer dritten äußeren Drehrate um die erste Achse (z-Achse), welche mit der ersten Drehratensensoreinrichtung 100 zum oszillierenden Antreiben der ersten Drehratensensoreinrichtung 100 um die erste Achse (z-Achse) über die erste Kopplungseinrichtung S1, F5, S2, F6, SA, SB, F12 verbunden ist, wobei, wie bereits oben erwähnt, die Federeinrichtung F12 zugleich eine Kopplungseinrichtung zwischen der ersten Rotoreinrichtung 1a und der zweiten Rotoreinrichtung 1b bildet.

Die bereits oben erwähnte linear antreibbare zweite Drehratensensoreinrichtung 200 weist eine Rahmeneinrichtung R1, R2 mit einem ersten Rahmen R1 und einem zweiten Rahmen R2 auf, wobei der zweite Rahmen R2 vollständig vom ersten Rahmen R1 umgeben ist bzw. sich in einer Aussparung des ersten Rahmens R1 befindet.

Über eine nur schematisch mit Bezugszeichen AT angedeutete Antriebseinrichtung ist der erste Rahmen R1 entlang der zweiten Achse (y-Achse) oszillierend antreibbar und der zweite Rahmen R2 entlang der zweiten Achse (y-Achse) gegenphasig zum ersten Rahmen R1 oszillierend antreibbar. Die Pfeile mit Bezugszeichen AB deuten die jeweiligen Antriebsbewegungen des ersten Rahmens R1 und des zweiten Rahmens R2 an. Diese Antriebseinrichtung AT ist beispielsweise ein an sich bekannter Kammelektrodenantrieb.

Der erste Rahmen R1 und der zweite Rahmen R2 sind durch die dritte äußere Drehrate um die erste Achse (z-Achse) gegenphasig entlang der dritten Achse (x-Achse) oszillierend auslenkbar, was durch die Pfeile mit Bezugszeichen DB als Detektionsbewegung veranschaulicht ist.

Der erste Rahmen R1 und der zweite Rahmen R2 sind über eine dritte Kopplungseinrichtung mit Federn 4a, 4b derart gekoppelt, dass ein gleichphasiges Auslenken des ersten und zweiten Rahmens R1, R2 entlang der dritten Achse (x-Achse) unterdrückt und ein gegenphasiges Auslenken des ersten und zweiten Rahmes R1, R2 entlang der dritten Achse (x-Achse) ermöglicht ist. Diese speziellen Federn 4a, 4b weisen ebenfalls eine anisotrope Federkonstante auf und werden weiter unten näher erläutert.

Wie bereits oben erwähnt, sind der erste und zweite Rahmen R1, R2 mit der ersten und zweiten Rotoreinrichtung 1a, 1b zum gegenphasigen oszillierenden Antreiben der ersten und zweiten Rotoreinrichtung 1a, 1b um die erste Achse (z-Achse) über die erste Kopplungseinrichtung S1, F5, S2, F6, SA, SB, F12 verbunden, wobei die Federeinrichtung F12 ebenfalls ein antiparalleles Verkippen der ersten und zweiten Rotoreinrichtung 1a, 1b um die zweite Achse (y-Achse) bevorzugt möglich macht. Somit dient die Antriebseinrichtung AT als eine gemeinsame Antriebseinrichtung für die erste und zweite Drehratensensoreinrichtung 100, 200.

Diese erste Kopplungseinrichtung weist insbesondere einen ersten Steg S1 und eine weitere Federeinrichtung F5 auf, welche den ersten Rahmen R1 mit der ersten Rotoreinrichtung 1a verbinden sowie einen zweiten Steg S2 und eine dritte Federeinrichtung F6, welche den ersten Rahmen R1 mit der zweiten Rotoreinrichtung 1b verbinden. Der erste und zweite Steg S1, S2 setzen bei diesen Beispiel unmittelbar an den kurzen Seiten des ersten Rahmens R1 an.

Weiterhin weist die erste Kopplungseinrichtung einen dritten Steg SA und einen vierten Steg SB auf, welche den zweiten Rahmen R2 mit der ersten und zweiten Rotoreinrichtung 1a, 1b über die Federeinrichtung F12 verbinden.

Da der zweite Rahmen R2 vollständig vom ersten Rahmen R1 umgeben ist, müssen die beiden Stege SA, SB zumindest in den mit Bezugszeichen 5 bezeichneten Bereichen in einer tieferen Ebene verlaufen als der erste Rahmen R1 und die zweite Wippe 3b. Dies kann beispielsweise durch entsprechende geätzte Aussparungen erreicht werden.

Schließlich ist eine dritte Erfassungseinrichtung EK1, EK2, EK3 an der zweiten Drehratensensoreinrichtung 200 zum Erfassen eines gegenphasigen Auslenkens des ersten und zweiten Rahmens R1, R2 entlang der dritten Achse (x-Achse) vorgesehen (Detektionsbewegung DB).

Bei der vorliegenden ersten Ausführungsform weist die dritte Erfassungseinrichtung EK1, EK2, EK3 eine erste Mehrzahl von kapazitiven Kammelektroden EK1, eine zweite Mehrzahl von kapazitiven Kammelektroden EK2 und eine dritte Mehrzahl von kapazitiven Kammelektroden EK3 auf.

Die erste Mehrzahl von kapazitiven Kammelektroden EK1 und die zweite Mehrzahl von kapazitiven Kammelektroden EK2 sind dabei in entsprechend ausgesparten Bereichen des ersten Rahmens R1 angeordnet, und zwar in gegenüberliegenden Randbereichen des ersten Rahmens R1, wobei die dritte Mehrzahl von kapazitiven Kammelektroden EK3 innerhalb einer Aussparung des zweiten Rahmens R2 angeordnet ist. Aus Gründen der vereinfachten Darstellung sind die jeweiligen im (nicht dargestellte) Substrat verankerten kapazitiven Gegenelektroden in den Figuren nicht dargestellt.

Zweckmäßigerweise sind die Massen des ersten Rahmens R1 und des zweiten Rahmens R2 gleich groß und die Geometrie ist achsensymmetrisch zur zweiten Achse (y-Achse) und dritten Achse (x-Achse) aufgrund des gemeinsamen Massenschwerpunkts. Bei einem derartigen Design ist die mikromechanische Drehraten-Sensoranordnung äußerst robust gegen äußere Linear- und Drehbeschleunigung, d.h. Linear- oder Drehbeschleunigungen liefern kein Detektionssignal.

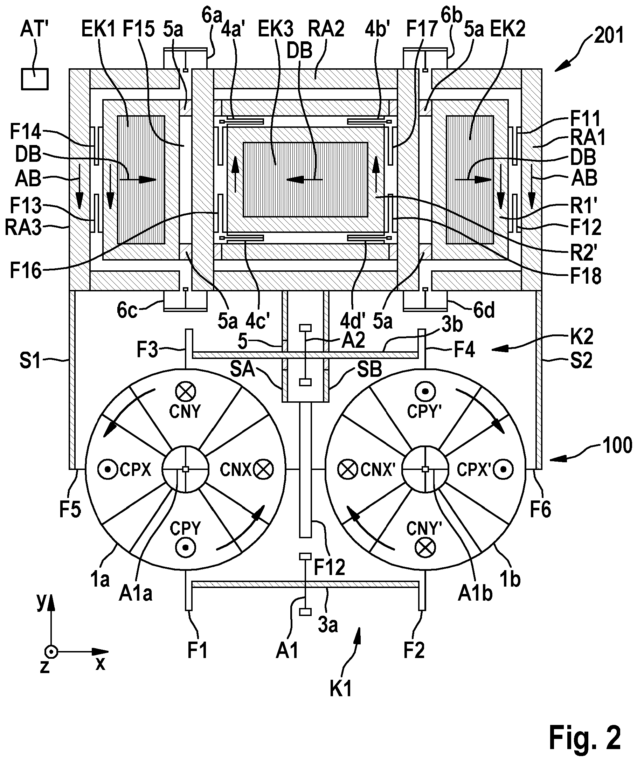

Fig. 2 zeigt eine schematische ebene Darstellung zur Erläuterung einer mikromechanischen Drehraten-Sensoranordnung gemäß einer zweiten Ausführungsform der vorliegenden Erfindung.

Bei der zweiten Ausführungsform ist die erste Drehratensensoreinrichtung 100 analog zur oben beschriebenen ersten Ausführungsform aufgebaut, wohingegen sich die zweite Drehratensensoreinrichtung 201 von der bereits beschriebenen Drehratensensoreinrichtung 200 der ersten Ausführungsform unterscheidet.

Die linear antreibbare zweite Drehratensensoreinrichtung 201 weist ebenfalls einen ersten Rahmen R1' und einen zweiten Rahmen R2' auf, welche analog zu dem oben beschriebenen ersten Rahmen R1 und zweiten Rahmen R2 aufgebaut sind.

Im Gegensatz zur ersten Ausführungsform weist die dritte Kopplungseinrichtung 4a'-4d', über die der erste Rahmen R1' und der zweite Rahmen R2' gekoppelt sind, vier anisotrope Federn 4a', 4b', 4c', 4d' auf, welche, wie bereits erwähnt, ein asymmetrisches Auslenken des ersten Rahmens R1' und des zweiten Rahmens R2' bevorzugt möglich machen.

Zusätzlich vorgesehen zur ersten Ausführungsform ist bei der zweiten Ausführungsform eine Antriebsrahmeneinrichtung RA1, RA2, RA3 zum gegenphasigen linearen Antreiben des ersten Rahmens R1' und des zweiten Rahmens R2', welche über eine vierte Federeinrichtung mit Federelementen F11 bis F18 mit dem ersten Rahmen R1' und dem zweiten Rahmen R2' verbunden ist.

Die Antriebsrahmeneinrichtung RA1, RA2, RA3 ist nur in der Richtung der Antriebsbewegung AB bewegbar, wohingegen der erste Rahmen R1' und der zweite Rahmen R2' sowohl in der Richtung der Antriebsbewegung AB als auch in der Richtung der Detektionsbewegung DB beweglich sind. Eine Antriebseinrichtung AT' für die Antriebsrahmeneinrichtung RA1, RA2, RA3 ist nur schematisch mit Bezugszeichen AT' dargestellt und kann, wie oben erwähnt, beispielsweise durch elektrostatische Antriebskämme realisiert werden.

Insbesondere weist die Antriebsrahmeneinrichtung RA1, RA2, RA3 einen ersten, zweiten und dritten Antriebsrahmen RA1, RA2, RA3 auf. Der erste Antriebsrahmen RA1 und der dritte Antriebsrahmen RA3 sind an gegenüberliegenden Schmalseiten des ersten Rahmens R1' u-förmig angeordnet. Der dritte Antriebsrahmen RA3 umgibt den zweiten Rahmen R2' und ist bereichsweise über den ersten Rahmen R1' in den mit 5a bezeichneten Bereichen geführt ist. Der erste Antriebsrahmen RA1 und der dritte Antriebsrahmen RA3 sind über eine fünfte Federeinrichtung 6a-6d mit anisotropen Federn 6a, 6b, 6c, 6d mit dem zweiten Antriebsrahmen RA2 verbunden.

Im Gegensatz zur oben beschriebenen ersten Ausführungsform ist bei der zweiten Ausführungsform die Antriebsrahmeneinrichtung RA1, RA2, RA3 mit der ersten und zweiten Rotoreinrichtung 1a, 1b zum gegenphasigen oszillierenden Antreiben der ersten und zweiten Rotoreinrichtung 1a, 1b um die erste Achse (z-Achse) über die erste Kopplungseinrichtung S1, F5, S2, F6, SA, SB, F12 verbunden.

Dabei sind die Stege S2, S1 mit dem ersten bzw. dritten Antriebsrahmen RA3 bzw. RA1 verbunden, wohingegen die Stege SA, SB mit dem zweiten Antriebsrahmen RA2 verbunden sind.

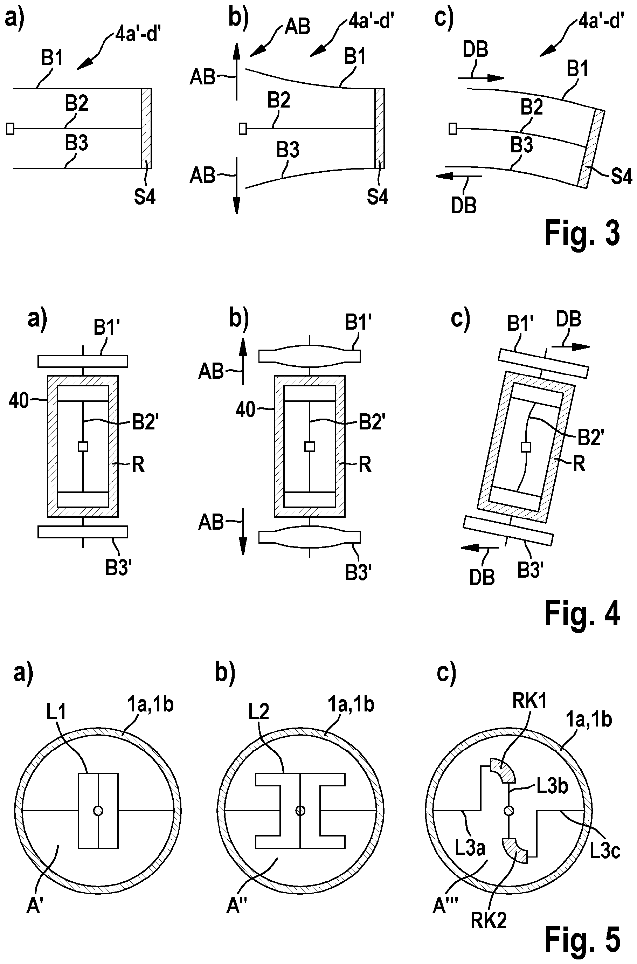

Fig. 3a)-c) sind schematische ebene Darstellungen zur Erläuterung einer Federkopplungseinrichtung für die mikromechanische Drehraten-Sensoranordnung gemäß der vorliegenden Erfindung.

Insbesondere zeigen Figuren 3a)-3c) eine vergrößerte Darstellung der anisotropen Federn 4a'-4d' der dritten Kopplungseinrichtung gemäß Fig. 2.

Die Federn 4a'-4d' weisen einen ersten, zweiten und dritten elastischen dünnen Steg B1, B2, B3 sowie einen starren breiteren Verbindungssteg SG auf. Der erste Steg B1 ist mit dem ersten Rahmen R1' verbunden, wohingegen der dritte Steg B3 mit dem zweiten Rahmen R2' verbunden ist. Der zweite Steg B2 ist auf dem (nicht dargestellten) Substrat verankert. Fig. 3a) zeigt den nicht ausgelenkten Zustand, wohingegen Fig. 3b) den ausgelenkten Zustand bei der Antriebsbewegung AB zeigt und Fig. 3c) den ausgelenkten Zustand bei der Detektionsbewegung DB zeigt.

Fig. 4a)-c) sind schematische ebene Darstellungen zur Erläuterung einer weiteren Federkopplungseinrichtung für die mikromechanische Drehraten-Sensoranordnung gemäß der vorliegenden Erfindung.

Insbesondere weist die anisotrope Feder 40 einen starren breiten Rahmen R auf, an den ein erster elastischer dünnerer Steg B1', ein zweiter elastischer dünnerer Steg B2' und ein dritter elastischer dünnerer Steg B3' angekoppelt sind. Der erste elastische Steg B1' ist mit dem ersten Rahmen R1' verbunden, der zweite elastische Steg B2' ist mit dem (nicht dargestellten) Substrat und dem Inneren des Rahmens R verbunden, und der dritte elastische Steg B3' ist mit dem zweiten Rahmen R2' verbunden. In Analogie zu Fig. 3b), c) zeigen Fig. 4b), 4c) den ausgelenkten Zustand bei Antriebsbewegung AB bzw. bei Detektionsbewegung DB.

Fig. 5a)-c) sind schematische ebene Darstellungen zur Erläuterung verschiedener Federaufhängungseinrichtungen für die mikromechanische Drehraten-Sensoranordnung gemäß der vorliegenden Erfindung.

In Fig. 5a)-c) sind insbesondere drei verschiedene Ausgestaltungen A', A" und A" der ersten und zweiten Aufhängungseinrichtung A1a, A1b der ersten und zweiten Rotoreinrichtung 1a, 1b gezeigt.

Die erste Ausgestaltung weist eine erste gefaltete Feder L1 auf, welche um die erste Achse (z-Achse) rotieren kann und um die zweite Achse (y-Achse) und dritte Achse (x-Achse) kippen kann.

Die zweite Ausgestaltung weist eine unterschiedliche gefaltete Feder L2 auf, welche die gleichen mechanischen Eigenschaften aufweist.

Die dritte Ausgestaltung A1‴ weist eine Kombination von elastischen Federn L3a, L3b, L3c auf, welche über starre gekrümmte Bogenelemente RK1, RK2 miteinander verbunden sind. Auch die dritte Ausgestaltung A1‴ kann um die erste Achse (z-Achse) rotieren und um die zweite Achse (y-Achse) und dritte Achse (x Achse) kippen.

Jeweils zentral sind die Aufhängungseinrichtungen A', A", A‴ am (nicht dargestellten) Substrat verankert.

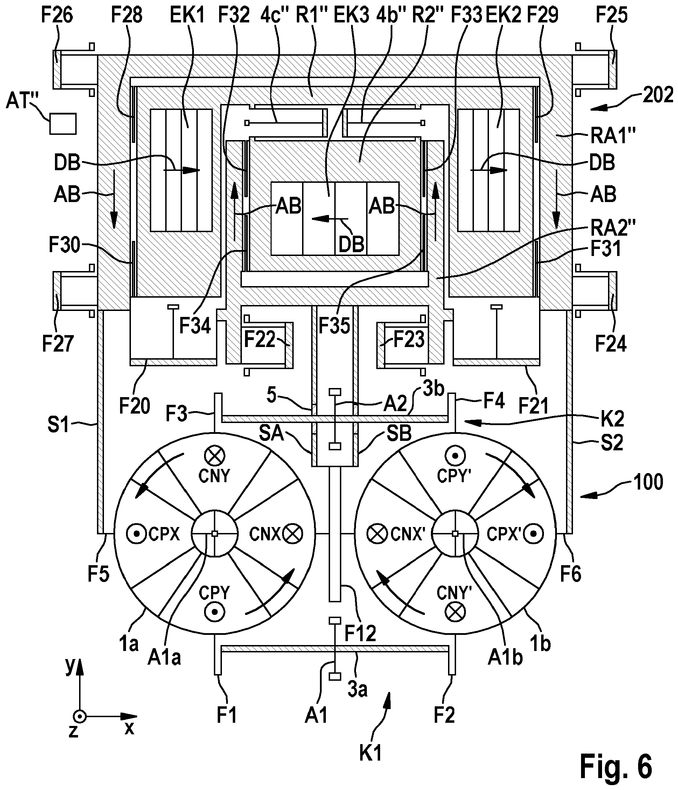

Fig. 6 zeigt eine schematische ebene Darstellung zur Erläuterung einer mikromechanischen Drehraten-Sensoranordnung gemäß einer dritten Ausführungsform der vorliegenden Erfindung.

Bei der dritten Ausführungsform unterscheidet sich wie bei der zweiten Ausführungsform nur die zweite Drehratensensoreinrichtung 202 von den bereits beschriebenen zweiten Drehratensensoreinrichtungen 200, 201.

Die erste Drehratensensoreinrichtung 100 ist wie bei der ersten und zweiten Ausführungsform ausgestaltet.

Insbesondere weist die zweite Drehratensensoreinrichtung 202 gemäß der dritten Ausführungsform einen ersten Rahmen R1" und einen zweiten Rahmen R2" auf, welche über die dritte Kopplungseinrichtung 4a", 4b" (vgl. Fig. 3a)-c)) miteinander verbunden sind.

Der erste Rahmen R1" ist u-förmig ausgestaltet, und der zweite Rahmen R2" ist in der u-Aussparung über die Federn 4a", 4b" der dritten Kopplungseinrichtung daran aufgehängt. Die Rahmen R1", R2" können sich sowohl in Richtung der Antriebsbewegung AB als auch in Richtung der Detektionsbewegung DB bewegen.

Es ist eine Antriebsrahmeneinrichtung RA1", RA2" vorgesehen, welche einen ersten Antriebsrahmen RA1", der den ersten Rahmen R1" und den zweiten Rahmen R2" u-förmig umschließt, aufweist. Weiterhin vorgesehen ist ein zweiter Antriebsrahmen RA2", der gabelförmig zwischen den ersten Rahmen R1" und den zweiten Rahmen R2" eingeführt ist, wobei der erste und zweite Antriebsrahmen RA1", RA2" über anisotrope Federn F20, F21 miteinander verbunden sind.

Der erste Antriebsrahmen RA1" ist zusätzlich über anisotrope Federn F24, F25, F26, F27 mit dem (nicht dargestellten) Substrat verbunden. Der zweite Antriebsrahmen RA2" ist zusätzlich über Federn F22, F23 mit dem (nicht dargestellten) Substrat verbunden. Die Antriebseinrichtung AT" für den ersten Antriebsrahmen RA1" und den zweiten Antriebsrahmen RA2" ist aus Gründen der Übersichtlichkeit wiederum nur schematisch dargestellt.

Der erste Antriebsrahmen RA1" ist über Federn F28, F29, F30, F31 mit dem ersten Rahmen R1" verbunden, und der zweite Antriebsrahmen RA2" ist über Federn F32, F33, F34, F35 mit dem zweiten Rahmen R2" verbunden.

Bei dieser Ausführungsform sind die Stege S1, S2 mit dem ersten Antriebsrahmen RA1" verbunden, wohingegen die Stege SA, SB mit dem zweiten Antriebsrahmen RA2" verbunden sind.

Bei der dritten Ausführungsform sind der erste Rahmen R1" und der erste Antriebsrahmen RA1" u-förmig, und daher muss für die Stege SA, SB kein unterführter Bereich (siehe Bereich 5 oben) vorgesehen werden, was die Herstellung vereinfacht.

Lediglich zwischen den Stegen SA, SB und der zweiten Wippe 3b muss der unterführte Bereich 5 vorgesehen werden.

Ansonsten sind Funktion und Aufbau der dritten Ausführungsform analog zur oben beschriebenen ersten und zweiten Ausführungsform.

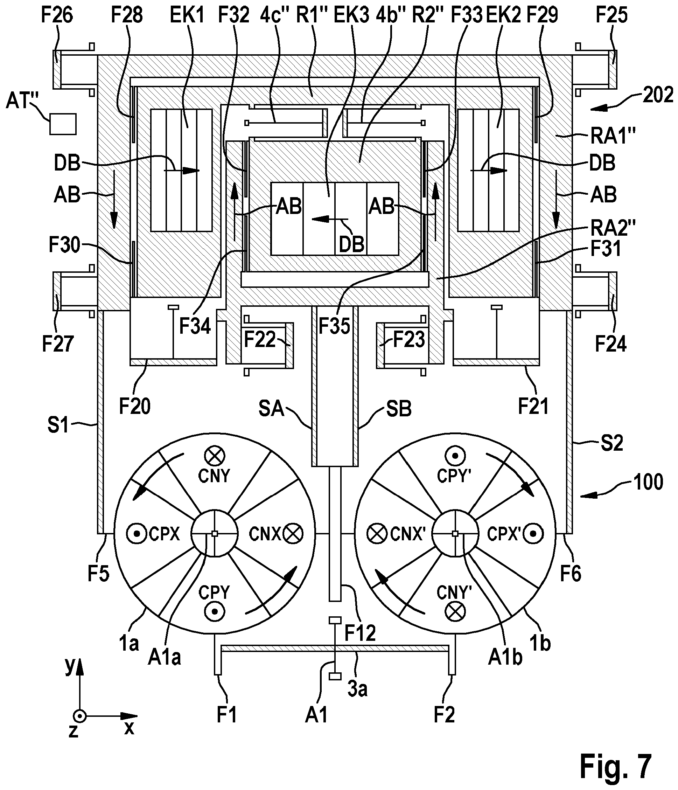

Fig. 7 zeigt eine schematische ebene Darstellung zur Erläuterung einer mikromechanischen Drehraten-Sensoranordnung gemäß einer vierten Ausführungsform der vorliegenden Erfindung.

Bei der vierten Ausführungsform ist die zweite Wippe 3b mit der Aufhängung A2 und den Federn F3, F4 weggelassen, so dass auch der unterführte Bereich 5 in diesem Bereich wegfallen kann.

Der Vorteil dieser vierten Ausführungsform ist, dass keine Unterführungen bzw. Kreuzungen notwendig sind und somit auf eine mechanische Schicht verzichtet werden kann.

Allerdings ist bei der vierten Ausführungsform die Drehbeschleunigungsrobustheit verringert. Dennoch ist die Empfindlichkeit auf Drehbeschleunigungen bei ineinandergreifenden Teilschwingern geringer als bei nebeneinanderliegenden Teilschwingern, da die Abstände der Massen vom gemeinsamen Schwerpunkt reduziert sind.

Obwohl die vorliegende Erfindung anhand bevorzugter Ausführungsbeispiele beschrieben wurde, ist sie darauf nicht beschränkt. Insbesondere sind die genannten Materialien und Topologien nur beispielhaft und nicht auf die erläuterten Beispiele beschränkt.

Bei weiteren nicht dargestellten und nicht unter die Erfindung fallenden Alternativ-Beispielen kann ebenfalls die erste Wippe mit Verankerung und Anbindung an die Rotationsmassen entfallen bzw. auch die Koppelfedereinrichtung zwischen den Rotoreinrichtungen entfallen.

Auch ist die Geometrie und Symmetrie der gezeigten ersten und zweiten Drehratensensoreinrichtung in den obigen Ausführungsformen nur beispielhaft und kann bedarfsweise variiert werden.

## Patentansprüche

1. Mikromechanische Drehraten-Sensoranordnung, welche aufweist:
eine rotatorisch um eine erste Achse (z) oszillierend antreibbare erste Drehratensensoreinrichtung (100) zum Erfassen einer ersten äußeren Drehrate um eine zweite Achse (y) und einer zweiten äußeren Drehrate um eine dritte Achse (x), wobei die erste, zweite und dritte Achse (z, y, x) senkrecht zueinander angeordnet sind; und
eine linear oszillierend entlang der zweiten Achse (y) durch eine Antriebseinrichtung (AT; AT'; AT") antreibbare zweite Drehratensensoreinrichtung (200; 201; 202) zum Erfassen einer dritten äußeren Drehrate um die erste Achse (z);
wobei die zweite Drehratensensoreinrichtung (200; 201; 202) mit der ersten Drehratensensoreinrichtung (100) zum Antreiben der ersten Drehratensensoreinrichtung (100) durch die Antriebseinrichtung (200; 201; 202) über eine erste Kopplungseinrichtung (S1, F5; S2, F6; SA, SB, F12) verbunden ist;
und wobei die rotatorisch antreibbare erste Drehratensensoreinrichtung (100) aufweist:
eine erste Rotoreinrichtung (1a), welche um die erste Achse (z) oszillierend antreibbar ist, wobei die erste Rotoreinrichtung (1a) durch die erste äußere Drehrate um die zweite Achse (y) und durch die zweite äußere Drehrate um die dritte Achse(x) verkippbar ist;
eine zweite Rotoreinrichtung (1b), welche um die erste Achse (z) gegenphasig zur ersten Rotoreinrichtung (1a) oszillierend antreibbar ist, wobei die zweite Rotoreinrichtung (1b) durch die erste äußere Drehrate um die zweite Achse (y) und die zweite äußere Drehrate um die dritte Achse(x) antiparallel zur ersten Rotoreinrichtung (1a) verkippbar ist;
eine erste Erfassungseinrichtung (CPY, CNY; CPY', CNY') zum Erfassen eines antiparallelen Verkippens der ersten und zweiten Rotoreinrichtung (1a; 1b) um die zweite Achse (y); und
eine zweite Erfassungseinrichtung (CPX, CNX; CPX', CNX') zum Erfassen eines antiparallelen Verkippens der ersten und zweiten Rotoreinrichtung (1a; 1b) um die dritte Achse (x); eine zweite Kopplungseinrichtung (K1, K2), über die die erste Rotoreinrichtung (1a) und die zweite Rotoreinrichtung (1b) derart gekoppelt sind, dass ein paralleles Verkippen um die dritte Achse (x) unterdrückt und ein antiparalleles Verkippen um die dritte Achse (x) ermöglicht ist;
**dadurch gekennzeichnet, dass**
die erste Kopplungseinrichtung (S1, F5; S2, F6; SA, SB, F12) eine erste Federeinrichtung (F12) aufweist, über die die erste Rotoreinrichtung (1a) und die zweite Rotoreinrichtung (1b) derart gekoppelt sind, dass ein paralleles Verkippen um die zweite Achse (y) unterdrückt und ein antiparalleles Verkippen um die zweite Achse (y) ermöglicht ist.

2. Mikromechanische Drehraten-Sensoranordnung nach Anspruch 1, wobei die linear antreibbare zweite Drehratensensoreinrichtung (200; 201; 202) aufweist:
eine Rahmeneinrichtung (R1, R2; R1', R2'; R1", R2") mit einem ersten Rahmen (R1; R1'; R1") und einem zweiten Rahmen (R2; R2', R2");
wobei der zweite Rahmen (R2; R2'; R2") zumindest teilweise vom ersten Rahmen (R1; R1'; R1") umgeben ist;
wobei der erste Rahmen (R1; R1'; R1") entlang der zweiten Achse (y) oszillierend antreibbar ist und wobei der zweite Rahmen (R2; R2'; R2") entlang der zweiten Achse (y) gegenphasig zum ersten Rahmen (R1; R1'; R1") oszillierend antreibbar ist;
wobei der erste und zweite Rahmen (R1, R2; R1', R2'; R1", R2") durch die dritte äußere Drehrate um die erste Achse (z) gegenphasig entlang der dritten Achse (x) oszillierend auslenkbar sind;
eine dritte Kopplungseinrichtung (4a, 4b; 4a'-4d'; 4a", 4b"), über die der erste Rahmen (R1; R1'; R1") und der zweite Rahmen (R2; R2'; R2") derart gekoppelt sind, dass ein gleichphasiges Auslenken des ersten und zweiten Rahmens (R1, R2; R1', R2'; R1", R2") entlang der dritten Achse (x) unterdrückt und ein gegenphasiges Auslenken des ersten und zweiten Rahmens (R1, R2; R1', R2'; R1", R2") entlang der dritten Achse (x) ermöglicht ist; und
eine dritte Erfassungseinrichtung (EK1, EK2, EK3) zum Erfassen eines gegenphasigen Auslenkens des ersten und zweiten Rahmens (R1, R2; R1', R2'; R1", R2") entlang der dritten Achse (x).

3. Mikromechanische Drehraten-Sensoranordnung nach Anspruch 2, wobei der erste und zweite Rahmen (R1, R2) mit der ersten und zweiten Rotoreinrichtung (1a; 1b) zum gegenphasigen oszillierenden Antreiben der ersten und zweiten Rotoreinrichtung (1a; 1b) um die erste Achse (z) über die erste Kopplungseinrichtung (S1, F5; S2, F6; SA, SB, F12) verbunden sind.

4. Mikromechanische Drehraten-Sensoranordnung nach Anspruch 2, wobei eine Antriebsrahmeneinrichtung (RA1, RA2, RA3; RA1", RA2") zum Antreiben des ersten und zweiten Rahmens (R1, R2; R1', R2'; R1", R2") aufweist, die über eine vierte Federeinrichtung (F11-F18; F28-F35) mit dem ersten Rahmen (R1; R1'; R1") und dem zweiten Rahmen (R2; R2'; R2") verbunden ist.

5. Mikromechanische Drehraten-Sensoranordnung nach Anspruch 4, wobei die Antriebsrahmeneinrichtung (RA1, RA2, RA3; RA1", RA2") mit der ersten und zweiten Rotoreinrichtung (1a; 1b) zum gegenphasigen oszillierenden Antreiben der ersten und zweiten Rotoreinrichtung (1a; 1b) um die erste Achse (z) über die erste Kopplungseinrichtung (S1, F5; S2, F6; SA, SB, F12) verbunden ist.

6. Mikromechanische Drehraten-Sensoranordnung nach Anspruch 4 oder 5, wobei die Antriebsrahmeneinrichtung (RA1, RA2, RA3; RA1", RA2") einen ersten Antriebsrahmen (RA1) und einen zweiten Antriebsrahmen (RA2) aufweist, welche an gegenüberliegenden Seiten des ersten Rahmens (R1') angeordnet sind, und einen dritten Antriebsrahmen (RA3) aufweist, der den zweiten Rahmen (R2') umgibt und bereichsweise über den ersten Rahmen (R1') geführt ist, wobei der erste und zweite Antriebsrahmen (RA1, RA2) über eine fünfte Federeinrichtung (6a-6d) mit dem dritten Antriebsrahmen (RA3) verbunden sind.

7. Mikromechanische Drehraten-Sensoranordnung nach Anspruch 4 oder 5, wobei die Antriebsrahmeneinrichtung (RA1", RA2") einen ersten Antriebsrahmen (RA1") aufweist, der den ersten Rahmen (R1") und den zweiten Rahmen (R2") u-förmig umschließt, und einen zweiten Antriebsrahmen (RA2") aufweist, der gabelförmig zwischen den ersten Rahmen (R1") und den zweiten Rahmen (R2") eingeführt ist, wobei der erste und zweite Antriebsrahmen (RA1", RA2") über eine sechste Federeinrichtung (F20, F21) verbunden sind.

8. Mikromechanische Drehraten-Sensoranordnung nach einem der Ansprüche 3 bis 7, wobei die erste Kopplungseinrichtung (S1, F5; S2, F6; SA, SB, F12) einen ersten Steg (S1) und eine zweite Federeinrichtung (F5) aufweist, welche den ersten Rahmen (R1; R1'; R1") mit der ersten Rotoreinrichtung (1a) verbinden, und wobei die erste Kopplungseinrichtung (S1, F5; S2, F6; SA, SB, F12) einen zweiten Steg (S2) und eine dritte Federeinrichtung (F6) aufweist.

9. Mikromechanische Drehraten-Sensoranordnung nach Anspruch 8, wobei die erste Kopplungseinrichtung (S1, F5; S2, F6; SA, SB, F12) einen dritten Steg (SA) und einen vierten Steg (SB) aufweist, welche mit der ersten Federeinrichtung (F12) verbunden sind.

10. Mikromechanische Drehraten-Sensoranordnung nach einem der Ansprüche 1 bis 9, wobei die zweite Kopplungseinrichtung (K1, K2) eine erste Wippe (3a) aufweist, welche über eine siebente Federeinrichtung (F1, F2) mit der ersten und zweiten Rotoreinrichtung (1a, 1b) verbunden ist, und eine zweite Wippe (3b) aufweist, welche über eine achte Federeinrichtung (F3, F4) mit der ersten und zweiten Rotoreinrichtung (1a, 1b) verbunden ist.

11. Mikromechanische Drehraten-Sensoranordnung nach einem der Ansprüche 1 bis 10, wobei die dritte Kopplungseinrichtung (4a, 4b; 4a'-4d'; 4a", 4b") eine neunte Federeinrichtung (4a, 4b; 4a'-4d'; 4a", 4b") mit einer Mehrzahl von Federn aufweist.

12. Mikromechanische Drehraten-Sensoranordnung nach einem der Ansprüche 1 bis 11, wobei die erste Erfassungseinrichtung (CPY, CNY; CPY', CNY') und die zweite Erfassungseinrichtung (CPX, CNX; CPX', CNX') eine jeweilige Mehrzahl kapazitiver Plattenelektroden aufweisen, welche unterhalb der ersten und zweiten Rotoreinrichtung (1a, 1b) angeordnet sind.

13. Mikromechanische Drehraten-Sensoranordnung nach einem der Ansprüche 2 bis 12, wobei die dritte Erfassungseinrichtung (EK1, EK2, EK3) eine Mehrzahl von kapazitiven Kammelektroden aufweist, welche innerhalb des ersten und zweiten Rahmens (R1, R2; R1', R2'; R1", R2") angeordnet sind.

14. Herstellungsverfahren für eine mikromechanische Drehraten-Sensoranordnung, welches die Schritte aufweist:
Bilden einer rotatorisch um eine erste Achse (z) oszillierend antreibbaren ersten Drehratensensoreinrichtung (100) zum Erfassen einer ersten äußeren Drehrate um eine zweite Achse (y) und einer zweiten äußeren Drehrate um eine dritte Achse (x), wobei die erste, zweite und dritte Achse (z, y, x) senkrecht zueinander angeordnet sind;
Bilden einer linear oszillierend entlang der zweiten Achse (y) antreibbaren zweiten Drehratensensoreinrichtung (200; 201; 202) zum Erfassen einer dritten äußeren Drehrate um die erste Achse (z);
Verbinden der zweiten Drehratensensoreinrichtung (200; 201; 202) mit der ersten Drehratensensoreinrichtung (100) zum oszillierenden Antreiben der ersten Drehratensensoreinrichtung (100) um die erste Achse (z) über eine erste Kopplungseinrichtung (S1, F5; S2, F6; SA, SB, F12);
wobei die rotatorisch antreibbare erste Drehratensensoreinrichtung (100) gebildet wird mit:
- einer ersten Rotoreinrichtung (1a), welche um die erste Achse (z) oszillierend antreibbar ist, wobei die erste Rotoreinrichtung (1a) durch die erste äußere Drehrate um die zweite Achse (y) und durch die zweite äußere Drehrate um die dritte Achse(x) verkippbar ist;
- einer zweiten Rotoreinrichtung (1b), welche um die erste Achse (z) gegenphasig zur ersten Rotoreinrichtung (1a) oszillierend antreibbar ist, wobei die zweite Rotoreinrichtung (1b) durch die erste äußere Drehrate um die zweite Achse (y) und die zweite äußere Drehrate um die dritte Achse(x) antiparallel zur ersten Rotoreinrichtung (1a) verkippbar ist;
- einer ersten Erfassungseinrichtung (CPY, CNY; CPY', CNY') zum Erfassen eines antiparallelen Verkippens der ersten und zweiten Rotoreinrichtung (1a; 1b) um die zweite Achse (y); und
- einer zweiten Erfassungseinrichtung (CPX, CNX; CPX', CNX') zum Erfassen eines antiparallelen Verkippens der ersten und zweiten Rotoreinrichtung (1a; 1b) um die dritte Achse (x);
- einer zweiten Kopplungseinrichtung (K1, K2), über die die erste Rotoreinrichtung (1a) und die zweite Rotoreinrichtung (1b) derart gekoppelt sind, dass ein paralleles Verkippen um die dritte Achse (x) unterdrückt und ein antiparalleles Verkippen um die dritte Achse (x) ermöglicht ist;
**dadurch gekennzeichnet, dass**
die erste Kopplungseinrichtung (S1, F5; S2, F6; SA, SB, F12) mit einer ersten Federeinrichtung (F12) gebildet wird, über die die erste Rotoreinrichtung (1a) und die zweite Rotoreinrichtung (1b) derart gekoppelt sind, dass ein paralleles Verkippen um die zweite Achse (y) unterdrückt und ein antiparalleles Verkippen um die zweite Achse (y) ermöglicht ist.

## Claims

1. Micromechanical rate-of-rotation sensor arrangement, which comprises:
a first rate-of-rotation sensor device (100), which is rotatably drivable in an oscillating manner about a first axis (z), for detecting a first outer rate of rotation about a second axis (y) and a second outer rate of rotation about a third axis (x), wherein the first, second and third axes (z, y, x) are arranged perpendicular to one another; and
a second rate-of-rotation sensor device (200; 201; 202), which is drivable in a linearly oscillating manner along the second axis (y) by means of a drive device (AT; AT'; AT"), for detecting a third outer rate of rotation about the first axis (z);
wherein the second rate-of-rotation sensor device (200; 201; 202) is connected to the first rate-of-rotation sensor device (100) for driving the first rate-of-rotation sensor device (100) by means of the drive device (200; 201; 202) via a first coupling device (S1, F5; S2, F6; SA, SB, F12);
and wherein the rotatably drivable first rate-of-rotation sensor device (100) comprises:
a first rotor device (1a), which is drivable in an oscillating manner about the first axis (z), wherein the first rotor device (1a) is tiltable about the second axis (y) by the first outer rate of rotation and about the third axis (x) by the second outer rate of rotation;
a second rotor device (1b), which is drivable in an oscillating manner about the first axis (z) in phase opposition to the first rotor device (1a), wherein the second rotor device (1b) is tiltable about the second axis (y) by the first outer rate of rotation and about the third axis (x) by the second outer rate of rotation in anti-parallel to the first rotor device (1a);
a first detection device (CPY, CNY; CPY', CNY') for detecting an anti-parallel tilting of the first and second rotor devices (1a; 1b) about the second axis (y); and
a second detection device (CPX, CNX; CPX', CNX') for detecting an anti-parallel tilting of the first and second rotor devices (1a; 1b) about the third axis (x);
a second coupling device (K1, K2), via which the first rotor device (1a) and the second rotor device (1b) are coupled in such a way that a parallel tilting about the third axis (x) is suppressed and an anti-parallel tilting about the third axis (x) is enabled;
**characterized in that**
the first coupling device (S1, F5; S2, F6; SA, SB, F12) comprises a first spring device (F12), via which the first rotor device (1a) and the second rotor device (1b) are coupled in such a way that a parallel tilting about the second axis (y) is suppressed and an anti-parallel tilting about the second axis (y) is enabled.

2. Micromechanical rate-of-rotation sensor arrangement according to Claim 1, wherein the linearly drivable second rate-of-rotation sensor device (200; 201; 202) comprises:
a frame device (R1, R2; R1', R2'; R1", R2") with a first frame (R1; R1'; R1") and a second frame (R2; R2'; R2") ;
wherein the second frame (R2; R2'; R2") is at least partially surrounded by the first frame (R1; R1'; R1");
wherein the first frame (R1; R1'; R1") is drivable in an oscillating manner along the second axis (y) and wherein the second frame (R2; R2'; R2") is drivable in an oscillating manner along the second axis (y) in phase opposition to the first frame (R1; R1'; R1");
wherein the first and second frames (R1, R2; R1', R2'; R1", R2") are deflectable in an oscillating manner about the first axis (z) in phase opposition along the third axis (x) by the third outer rate of rotation;
a third coupling device (4a, 4b; 4a'-4d'; 4a", 4b"), via which the first frame (R1; R1'; R1") and the second frame (R2; R2'; R2") are coupled in such a way that an in-phase deflection of the first and second frames (R1, R2; R1', R2'; R1", R2") along the third axis (x) is suppressed and an out-of-phase deflection of the first and second frames (R1, R2; R1', R2'; R1", R2") along the third axis (x) is enabled; and
a third detection device (EK1, EK2, EK3) for detecting an out-of-phase deflection of the first and second frames (R1, R2; R1', R2'; R1", R2") along the third axis (x).

3. Micromechanical rate-of-rotation sensor arrangement according to Claim 2, wherein the first and second frames (R1, R2) are connected to the first and second rotor devices (1a; 1b) for driving the first and second rotor devices (1a; 1b) in an oscillating manner in phase opposition about the first axis (z) via the first coupling device (S1, F5; S2, F6; SA, SB, F12).

4. Micromechanical rate-of-rotation sensor arrangement according to Claim 2, wherein comprises a drive frame device (RA1, RA2, RA3; RA1", PA2") for driving the first and second frames (R1, R2; R1', R2'; R1", R2"), which is connected to the first frame (R1; R1'; R1") and the second frame (R2; R2'; R2") via a fourth spring device (F11-F18; F28-F35).

5. Micromechanical rate-of-rotation sensor arrangement according to Claim 4, wherein the drive frame device (RA1, RA2, RA3; RA1", PA2") is connected to the first and second rotor devices (1a; 1b) for driving the first and second rotor devices (1a; 1b) in an oscillating manner in phase opposition about the first axis (z) via the first coupling device (S1, F5; S2, F6; SA, SB, F12).

6. Micromechanical rate-of-rotation sensor arrangement according to Claim 4 or 5, wherein the drive frame device (RA1, RA2, RA3; RA1", RA2") comprises a first drive frame (RA1) and a second drive frame (R2), which are arranged on opposite sides of the first frame (R1'), and comprises a third drive frame (RA3), which surrounds the second frame (R2') and is taken at least partly over the first frame (R1'), wherein the first and second drive frames (RA1, RA2) are connected to the third drive frame (RA3) via a fifth spring device (6a-6d).

7. Micromechanical rate-of-rotation sensor arrangement according to Claim 4 or 5, wherein the drive frame device (RA1", PA2") comprises a first drive frame (RA1"), which encloses the first frame (R1") and the second frame (R2") in a u-shaped manner, and comprises a second drive frame (RA2"), which is inserted between the first frame (R1") and the second frame (R2") in a fork-shaped manner, wherein the first and second drive frames (RA1", PA2") are connected via a sixth spring device (F20, F21) .

8. Micromechanical rate-of-rotation sensor arrangement according to one of Claims 3 to 7, wherein the first coupling device (S1, F5; S2, F6; SA, SB, F12) comprises a first web (S1) and a second spring device (F5), which connect the first frame (R1; R1'; R1") to the first rotor device (1a), and wherein the first coupling device (S1, F5; S2, F6; SA, SB, F12) comprises a second web (S2) and a third spring device (F6).

9. Micromechanical rate-of-rotation sensor arrangement according to Claim 8, wherein the first coupling device (S1, F5; S2, F6; SA, SB, F12) comprises a third web (SA) and a fourth web (SB), which are connected to the first spring device (F12).

10. Micromechanical rate-of-rotation sensor arrangement according to one of Claims 1 to 9, wherein the second coupling device (K1, K2) comprises a first rocker (3a), which is connected to the first and second rotor devices (1a, 1b) via a seventh spring device (F1, F2), and comprises a second rocker (3b), which is connected to the first and second rotor devices (1a, 1b) via an eighth spring device (F3, F4).

11. Micromechanical rate-of-rotation sensor arrangement according to one of Claims 1 to 10, wherein the third coupling device (4a, 4b; 4a'-4d'; 4a", 4b") comprises a ninth spring device (4a, 4b; 4a'-4d'; 4a", 4b") with a plurality of springs.

12. Micromechanical rate-of-rotation sensor arrangement according to one of Claims 1 to 11, wherein the first detection device (CPY, CNY; CPY', CNY') and the second detection device (CPX, CNX; CPX', CNX') comprise a respective plurality of capacitive plate electrodes, which are arranged under the first and second rotor devices (1a, 1b).

13. Micromechanical rate-of-rotation sensor arrangement according to one of Claims 2 to 12, wherein the third detection device (EK1, EK2, EK3) comprises a plurality of capacitive comb electrodes, which are arranged within the first and second frames (R1, R2; R1', R2'; R1", R2").

14. Manufacturing method for a micromechanical rate-of-rotation sensor arrangement, the method comprising the following steps:
forming a first rate-of-rotation sensor device (100), which is rotatably drivable in an oscillating manner about a first axis (z), for detecting a first outer rate of rotation about a second axis (y) and a second outer rate of rotation about a third axis (x), wherein the first, second and third axes (z, y, x) are arranged perpendicular to one another; and
forming a second rate-of-rotation sensor device (200; 201; 202), which is drivable in a linearly oscillating manner along the second axis (y), for detecting a third outer rate of rotation about the first axis (z);
connecting the second rate-of-rotation sensor device (200; 201; 202) to the first rate-of-rotation sensor device (100) for driving the first rate-of-rotation sensor device (100) in an oscillating manner about the first axis (z) via a first coupling device (S1, F5; S2, F6; SA, SB, F12);
wherein the rotatably drivable first rate-of-rotation sensor device (100) is formed with:
- a first rotor device (1a), which is drivable in an oscillating manner about the first axis (z), wherein the first rotor device (1a) is tiltable about the second axis (y) by the first outer rate of rotation and about the third axis (x) by the second outer rate of rotation;
- a second rotor device (1b), which is drivable in an oscillating manner about the first axis (z) in phase opposition to the first rotor device (1a), wherein the second rotor device (1b) is tiltable about the second axis (y) by the first outer rate of rotation and about the third axis (x) by the second outer rate of rotation in anti-parallel to the first rotor device (1a);
- a first detection device (CPY, CNY; CPY', CNY') for detecting an anti-parallel tilting of the first and second rotor devices (1a; 1b) about the second axis (y); and
- a second detection device (CPX, CNX; CPX', CNX') for detecting an anti-parallel tilting of the first and second rotor devices (1a; 1b) about the third axis (x);
- a second coupling device (K1, K2), via which the first rotor device (1a) and the second rotor device (1b) are coupled in such a way that a parallel tilting about the third axis (x) is suppressed and an anti-parallel tilting about the third axis (x) is enabled;
**characterized in that**
the first coupling device (S1, F5; S2, F6; SA, SB, F12) is formed with a first spring device (F12), via which the first rotor device (1a) and the second rotor device (1b) are coupled in such a way that a parallel tilting about the second axis (y) is suppressed and an anti-parallel tilting about the second axis (y) is enabled.

## Revendications

1. Agencement de capteurs de vitesse de rotation micromécaniques, présentant :
un premier dispositif capteur de vitesse de rotation (100) pouvant être entraîné en rotation autour d'un premier axe (z) de façon oscillante pour détecter une première vitesse de rotation extérieure autour d'un deuxième axe (y) et une deuxième vitesse de rotation extérieure autour d'un troisième axe (x), le premier, le deuxième et le troisième axe (z, y, x) étant disposés perpendiculairement les uns par rapport aux autres ; et
un deuxième dispositif capteur de vitesse de rotation (200 ; 201 ; 202) pouvant être entraîné par un dispositif d'entraînement (AT ; AT' ; AT") linéairement de façon oscillante le long du deuxième axe (y) pour détecter une troisième vitesse de rotation extérieure autour du premier axe (z) ;
le deuxième dispositif capteur de vitesse de rotation (200 ; 201 ; 202) étant relié au premier dispositif capteur de vitesse de rotation (100) pour entraîner le premier dispositif capteur de vitesse de rotation (100) par le dispositif d'entraînement (200 ; 201 ; 202) par l'intermédiaire d'un premier dispositif d'accouplement (S1, F5 ; S2, F6 ; SA, SB, F12) ;
et dans lequel le premier dispositif capteur de vitesse de rotation (100) pouvant être entraîné en rotation présente :
un premier dispositif rotor (1a) qui peut être entraîné de façon oscillante autour du premier axe (z), le premier dispositif rotor (1a) pouvant être basculé par la première vitesse de rotation extérieure autour du deuxième axe (y) et par la deuxième vitesse de rotation extérieure autour du troisième axe (x) ;
un deuxième dispositif rotor (1b) qui peut être entraîné de façon oscillante autour du premier axe (z) en opposition de phase avec le premier dispositif rotor (1a), le deuxième dispositif rotor (1b) pouvant être basculé par la première vitesse de rotation extérieure autour du deuxième axe (y) et par la deuxième vitesse de rotation extérieure autour du troisième axe (x) de manière antiparallèle au premier dispositif rotor (1a) ;
un premier dispositif de détection (CPY, CNY ; CPY', CNY') pour détecter un basculement antiparallèle du premier et du deuxième dispositif rotor (1a ; 1b) autour du deuxième axe (y) ; et
un deuxième dispositif de détection (CPX, CNX ; CPX', CNX') pour détecter un basculement antiparallèle du premier et du deuxième dispositif rotor (1a ; 1b) autour du troisième axe (x) ;
un deuxième dispositif d'accouplement (K1, K2) par lequel le premier dispositif rotor (1a) et le deuxième dispositif rotor (1b) sont accouplés de telle sorte qu'un basculement parallèle autour du troisième axe (x) est supprimé et un basculement antiparallèle autour du troisième axe (x) est autorisé ;
**caractérisé en ce que** le premier dispositif d'accouplement (S1, F5 ; S2, F6 ; SA, SB, F12) présente un premier dispositif ressort (F12) par lequel le premier dispositif rotor (1a) et le deuxième dispositif rotor (1b) sont accouplés de telle sorte qu'un basculement parallèle autour du deuxième axe (y) est supprimé et un basculement antiparallèle autour du deuxième axe (y) est autorisé.

2. Agencement de capteurs de vitesse de rotation micromécaniques selon la revendication 1, le deuxième dispositif capteur de vitesse de rotation (200 ; 201 ; 202) pouvant être entraîné linéairement présentant :
un dispositif cadre (R1, R2 ; R1', R2' ; R1", R2") doté d'un premier cadre (R1; R1' ; R1") et d'un deuxième cadre (R2 ; R2', R2") ;
le deuxième cadre (R2 ; R2' ; R2") étant entouré au moins partiellement par le premier cadre (R1 ; R1' ; R1") ;
le premier cadre (R1; R1' ; R1") pouvant être entraîné de façon oscillante le long du deuxième axe (y), et le deuxième cadre (R2 ; R2' ; R2") pouvant être entraîné de façon oscillante le long du deuxième axe (y) en opposition de phase avec le premier cadre (R1 ; R1' ; R1") ;
le premier et le deuxième cadre (R1, R2 ; R1', R2' ; R1", R2") pouvant être déviés de façon oscillante par la troisième vitesse de rotation extérieure autour du premier axe (z) en opposition de phase le long du troisième axe (x) ;
un troisième dispositif d'accouplement (4a, 4b ; 4a'-4d' ; 4a", 4b") par lequel le premier cadre (R1 ; R1' ; R1") et le deuxième cadre (R2 ; R2' ; R2") sont accouplés de telle sorte qu'une déviation en phase du premier et du deuxième cadre (R1, R2 ; R1', R2' ; R1", R2") le long du troisième axe (x) est supprimée et une déviation en opposition de phase du premier et du deuxième cadre (R1, R2 ; R1', R2' ; R1", R2") le long du troisième axe (x) est autorisée ; et
un troisième dispositif de détection (EK1, EK2, EK3) pour détecter une déviation en opposition de phase du premier et du deuxième cadre (R1, R2 ; R1', R2' ; R1", R2") le long du troisième axe (x).

3. Agencement de capteurs de vitesse de rotation micromécaniques selon la revendication 2, dans lequel le premier et le deuxième cadre (R1, R2) sont reliés au premier et au deuxième dispositif rotor (1a ; 1b) pour entraîner de manière oscillante en opposition de phase le premier et le deuxième dispositif rotor (1a ; 1b) autour du premier axe (z) par l'intermédiaire du premier dispositif d'accouplement (S1, F5; S2, F6 ; SA, SB, F12).

4. Agencement de capteurs de vitesse de rotation micromécaniques selon la revendication 2, dans lequel présente un dispositif cadre d'entraînement (RA1, RA2, RA3 ; RA1", RA2") pour l'entraînement du premier et du deuxième cadre (R1, R2 ; R1', R2' ; R1", R2") qui est relié par l'intermédiaire d'un quatrième dispositif ressort (F11-F18; F28-F35) au premier cadre (R1; R1' ; R1") et au deuxième cadre (R2 ; R2' ; R2").

5. Agencement de capteurs de vitesse de rotation micromécaniques selon la revendication 4, dans lequel le dispositif cadre d'entraînement (RA1, RA2, RA3 ; RA1", RA2") est relié au premier et au deuxième dispositif rotor (1a ; 1b) pour l'entraînement oscillant en opposition de phase du premier et du deuxième dispositif rotor (1a ; 1b) autour du premier axe (z) par l'intermédiaire du premier dispositif d'accouplement (S1, F5 ; S2, F6 ; SA, SB, F12).

6. Agencement de capteurs de vitesse de rotation micromécaniques selon la revendication 4 ou 5, dans lequel le dispositif cadre d'entraînement (RA1, RA2, RA3; RA1", RA2") présente un premier cadre d'entraînement (RA1) et un deuxième cadre d'entraînement (RA2) qui sont disposés sur des côtés opposés du premier cadre (R1'), et présente un troisième cadre d'entraînement (RA3) qui entoure le deuxième cadre (R2') et est guidé par endroits par l'intermédiaire du premier cadre (R1'), le premier et le deuxième cadre d'entraînement (RA1, RA2) étant reliés par un cinquième dispositif ressort (6a à 6d) au troisième cadre d'entraînement (RA3).

7. Agencement de capteurs de vitesse de rotation micromécaniques selon la revendication 4 ou 5, dans lequel le dispositif cadre d'entraînement (RA1", RA2") présente un premier cadre d'entraînement (RA1") qui entoure le premier cadre (R1") et le deuxième cadre (R2") en forme de U, et présente un deuxième cadre d'entraînement (RA2") qui est introduit en forme de fourche entre le premier cadre (R1") et le deuxième cadre (R2"), le premier et le deuxième cadre d'entraînement (RA1", RA2") étant reliés par un sixième dispositif ressort (F20, F21).

8. Agencement de capteurs de vitesse de rotation micromécaniques selon l'une quelconque des revendications 3 à 7, dans lequel le premier dispositif d'accouplement (S1, F5 ; S2, F6 ; SA, SB, F12) présente une première entretoise (S1) et un deuxième dispositif ressort (F5) qui relient le premier cadre (R1; R1' ; R1") au premier dispositif rotor (1a), et le premier dispositif d'accouplement (S1, F5; S2, F6; SA, SB, F12) présentant une deuxième entretoise (S2) et un troisième dispositif ressort (F6).

9. Agencement de capteurs de vitesse de rotation micromécaniques selon la revendication 8, dans lequel le premier dispositif d'accouplement (S1, F5 ; S2, F6 ; SA, SB, F12) présente une troisième entretoise (SA) et une quatrième entretoise (SB) qui sont reliées au premier dispositif ressort (F12).

10. Agencement de capteurs de vitesse de rotation micromécaniques selon l'une quelconque des revendications 1 à 9, dans lequel le deuxième dispositif d'accouplement (K1, K2) présente une première bascule (3a) qui est reliée par l'intermédiaire d'un septième dispositif ressort (F1, F2) au premier et au deuxième dispositif rotor (1a, 1b), et présente une deuxième bascule (3b) qui est reliée par l'intermédiaire d'un huitième dispositif ressort (F3, F4) au premier et au deuxième dispositif rotor (1a, 1b).

11. Agencement de capteurs de vitesse de rotation micromécaniques selon l'une quelconque des revendications 1 à 10, dans lequel le troisième dispositif d'accouplement (4a, 4b ; 4a'-4d' ; 4a", 4b") présente un neuvième dispositif ressort (4a, 4b ; 4a'-4d' ; 4a", 4b") doté d'une pluralité de ressorts.

12. Agencement de capteurs de vitesse de rotation micromécaniques selon l'une quelconque des revendications 1 à 11, dans lequel le premier dispositif de détection (CPY, CNY ; CPY', CNY') et le deuxième dispositif de détection (CPX, CNX; CPX', CNX') présentent une pluralité respective d'électrodes à plaque capacitives qui sont disposées au-dessous du premier et du deuxième dispositif rotor (1a, 1b).

13. Agencement de capteurs de vitesse de rotation micromécaniques selon l'une quelconque des revendications 2 à 12, dans lequel le troisième dispositif de détection (EK1, EK2, EK3) présente une pluralité d'électrodes peignes capacitives qui sont disposées à l'intérieur du premier et du deuxième cadre (R1, R2 ; R1', R2' ; R1", R2").

14. Procédé de fabrication pour un agencement de capteurs de vitesse de rotation micromécaniques, présentant les étapes consistant à :
former un premier dispositif capteur de vitesse de rotation (100) pouvant être entraîné en rotation autour d'un premier axe (z) de façon oscillante pour détecter une première vitesse de rotation extérieure autour d'un deuxième axe (y) et une deuxième vitesse de rotation extérieure autour d'un troisième axe (x), le premier, le deuxième et le troisième axe (z, y, x) étant disposés perpendiculairement les uns par rapport aux autres ;
former un deuxième dispositif capteur de vitesse de rotation (200; 201 ; 202) pouvant être entraîné linéairement de façon oscillante le long du deuxième axe (y) pour détecter une troisième vitesse de rotation extérieure autour du premier axe (z) ;
relier le deuxième dispositif capteur de vitesse de rotation (200; 201 ; 202) au premier dispositif capteur de vitesse de rotation (100) pour entraîner de façon oscillante le premier dispositif capteur de vitesse de rotation (100) autour du premier axe (z) par l'intermédiaire d'un premier dispositif d'accouplement (S1, F5 ; S2, F6 ; SA, SB, F12) ;
dans lequel le premier dispositif capteur de vitesse de rotation (100) pouvant être entraîné en rotation est formé avec :
- un premier dispositif rotor (1a) qui peut être entraîné de façon oscillante autour du premier axe (z), le premier dispositif rotor (1a) pouvant être basculé par la première vitesse de rotation extérieure autour du deuxième axe (y) et par la deuxième vitesse de rotation extérieure autour du troisième axe (x) ;
- un deuxième dispositif rotor (1b) qui peut être entraîné de façon oscillante autour du premier axe (z) en opposition de phase avec le premier dispositif rotor (1a), le deuxième dispositif rotor (1b) pouvant être basculé par la première vitesse de rotation extérieure autour du deuxième axe (y) et par la deuxième vitesse de rotation extérieure autour du troisième axe (x) de manière antiparallèle au premier dispositif rotor (1a) ;
- un premier dispositif de détection (CPY, CNY ; CPY', CNY') pour détecter un basculement antiparallèle du premier et du deuxième dispositif rotor (1a ; 1b) autour du deuxième axe (y) ; et
- un deuxième dispositif de détection (CPX, CNX ; CPX', CNX') pour détecter un basculement antiparallèle du premier et du deuxième dispositif rotor (1a ; 1b) autour du troisième axe (x) ;
un deuxième dispositif d'accouplement (K1, K2) par lequel le premier dispositif rotor (1a) et le deuxième dispositif rotor (1b) sont accouplés de telle sorte qu'un basculement parallèle autour du troisième axe (x) est supprimé et un basculement antiparallèle autour du troisième axe (x) est autorisé ;
**caractérisé en ce que** le premier dispositif d'accouplement (S1, F5 ; S2, F6 ; SA, SB, F12) est formé avec un premier dispositif ressort (F12) par lequel le premier dispositif rotor (la) et le deuxième dispositif rotor (1b) sont accouplés de telle sorte qu'un basculement parallèle autour du deuxième axe (y) est supprimé et un basculement antiparallèle autour du deuxième axe (y) est autorisé.
